# EUROPEAN PATENT APPLICATION

(11) **EP 1 902 773 A1**
(43) Date of publication of application: **26.03.2008**
(21) Application number: 07252672.6
(22) Date of filing: 03.07.2007
(51) Int. Cl.: B01D 63/16, C02F 1/36, C02F 1/44

(54) **Closed type waste water treatment apparatus with ultrasonic vibrator**

(30) Priority: 19.09.2006 KR 20060090734; 21.11.2006 KR 20060115104
(71) Applicant: FILTECH KOREA CO., LTD., Daejeon 305-343 (KR)
(72) Inventor: Park, Gi-Taek, Daejon, 305-325 (KR)
(74) Representative: Neobard, William John

(57) **Abstract**

Disclosed is a closed type waste water treatment apparatus. The apparatus includes a barrel (160), a plurality of filters (170) installed within the barrel, and one or more ultrasonic vibrators (190). The ultrasonic filters are installed to extend through some of all of the filters within the barrel so as to apply ultrasonic vibration within the spaces between the filters. With this arrangement, it is possible to arrange one or more ultrasonic vibrators with a simple construction in a closed type waste water treatment apparatus. In addition, even if one or more rotors (180) are employed, the combined arrangement of ultrasonic vibrators can be simply implemented.

## Description

The present invention relates to a waste water treatment apparatus. Embodiments relate more particularly to a closed type waste water treatment apparatus which renders waste water to pass through one or more filters installed within a barrel so that treated water filtered by the filter is discharged to the outside of the barrel.

Typically, a waste water treatment apparatus for filtering pollutant from polluted waste water for purifying the waste water has one or more porous membrane filters, through which the polluted waste water passes. As the pollutant contained in the waste water is filtered by the porous membranes, purified water is discharged through the filters. In a waste water treatment apparatus employing one or more filters, solid matter is deposited on the surfaces or within pores of the filters while the waste water is filtered, thereby reducing the size of the pores serving as the passage of filtered water or even blocking the pores. As a result, the filtering performance of the filters is abruptly deteriorated. Therefore, what is needed is a device for removing the solid matter deposited on the filters.

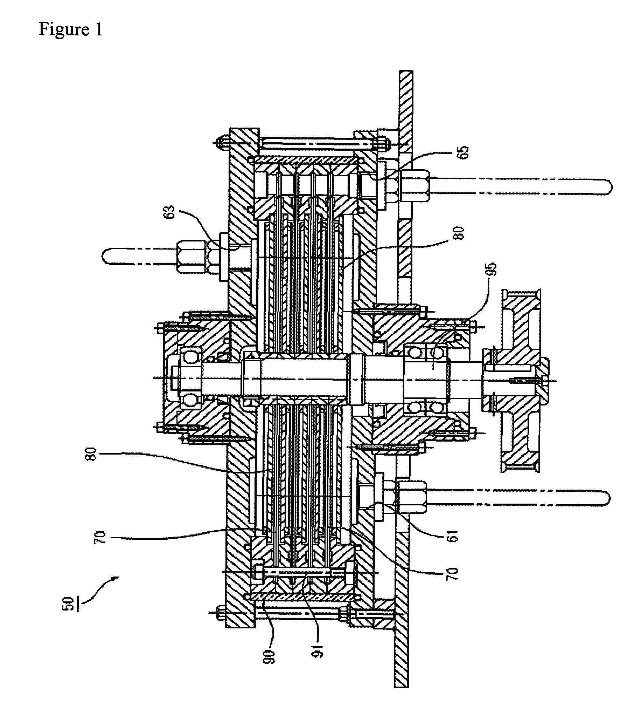

FIG. 1 is a vertical cross-sectional view of a conventional waste water treatment apparatus. In the shown example, a rotary membrane type waste water treatment apparatus, more particularly a waste water having a plurality of fixed membrane filters and a plurality of rotary rotors for removing solid matter from the filters is presented as an example of a prior art.

The waste water treatment apparatus 50 includes a barrel 60, a plurality of filters 70, and a plurality of rotors 80 stacked in the barrel 60. The barrel 60 includes a waste water inlet 61, a treated water outlet 65, and a concentrated water outlet 63. The filters 70 are anchored to the inner wall of the barrel 60 by bolts 91, and the rotors 80 are installed within the barrel 60 to be capable of rotating through a rotary shaft 65. Each of the filters 70 and the rotors 80 is formed in a disc shape, wherein the filters 70 and rotors 80 are alternately arranged within the barrel 60.

If waste water containing pollutant flows into the barrel 60 through the waste water inlet 61, the pollutant contained in the waste water is filtered by the filter 70 so that clear treated water is discharged to the outside of the barrel 60 through the treated water outlet 65, and concentrated water, in which pollutant is concentrated due to the filtering, is discharged to the outside of the barrel 60 through the concentrated water outlet 63. While the purifying operation of the waste water treatment apparatus 50 is performed, the rotors 80 are continuously rotated by the rotary shaft 95 which is driven by a motor (not shown, whereby the solid matter deposited on the membranes of the filters 70 is removed from the membranes by shearing stresses exerted by the rotated rotors 80. The removed pollutant is contained in the concentrated water and discharged to the outside through the concentrated water outlet 63.

Beyond the method of removing solid matter using the rotors 80 as described above, there is a conventional method of removing solid matter deposited on the filters 70 by employing one or more ultrasonic vibrators. Korean unexamined patent publication No.10-2006-0014598 (entitled "Membrane Apparatus for Treating Sewage and Method of Cleaning the Same") discloses a method of removing solid matter on a filter by applying vibration to the filter with ultrasonic waves. However, the waste water treatment apparatus disclosed in the publication is an open type waste water treatment apparatus, which does not employ such a method that renders waste water to flow into a closed barrel so that concentrated water and treated water are separately discharged to the outside of the barrel, but employs a method that provides one or more filters within an opened bucket and arranges one or more ultrasonic vibrators within the bucket so as to apply ultrasonic vibration to the filters.

However, the waste water treatment apparatus disclosed in the above-mentioned publication has a problem in that although such an open type waste water treatment apparatus as disclosed in the publication is manufactured at a relatively low cost but is poor in filtering effect as compared with a closed type waste water treatment apparatus.

If a closed type waste water treatment apparatus is fabricated so as to increase the filtering effect in consideration of the above-mentioned problem, it is difficult to employ a construction in which one or more ultrasonic vibrators are arranged at a lateral side of stacked filters as described in the above-mentioned publication. That is, if it is desired to employ one or more ultrasonic vibrators in the construction of the closed type waste water treatment as shown in FIG. 1, it may be conceived that each ultrasonic vibrator is arranged between each two adjacent filter trays. However, if the waste water treatment apparatus is fabricated in this manner, the cost needed for fabricating such a waste water treatment apparatus is high, and the endurance of the waste water treatment apparatus is deteriorated, due to the structural complexity of the apparatus.

Furthermore, the filtering effect obtained by the swirling vertex produced by the rotor arrangement as shown in FIG. 1 is higher than that obtained by ultrasonic vibrators. If ultrasonic vibrators are employed in combination with a rotor arrangement as shown in FIG. 1, it is expected that the entire filtering effect can be increased because the removal of solid filter from a fine area can be effected by ultrasonic waves. Therefore, what is needed is to provide a solution that makes it possible to install one or more ultrasonic vibrators in combination with rotors with a simple construction so as to increase the effect of removing solid matter.

Therefore, the present invention has been made to address the above-mentioned problems occurring in the prior art.

Embodiments provide a solution that makes it possible to install one or more ultrasonic vibrators with a simple construction in a closed type waste water treatment apparatus, and in particular a solution that makes it possible to simply realize the installation ultrasonic vibrators even in a rotor employing construction, thereby increasing the waste water treatment effect and endurance of such a waste water treatment apparatus while decreasing the manufacturing costs of the apparatus.

Accordingly, there is provided a closed type waste water treatment apparatus including: a barrel having a waste water inlet, through which waste water is introduced into the barrel, a treated water outlet, through which treated water obtained by filtering the waste water is discharged, and a concentrated water outlet, through which water concentrated with pollutant as a result of filtering the waste water is discharged; a plurality of filters for filtering the wastewater introduced through the waste water inlet, so that the treated water is discharged through the treated water outlet and the concentrated water is discharged through the concentrated water outlet; and one or more ultrasonic filters installed to extend through some of all of the filters within the barrel so as to apply ultrasonic vibration within the spaces between the filters.

In embodiments, it is possible to arrange one or more ultrasonic vibrators with a simple construction in a closed type waste water treatment apparatus. In addition, even if one or more rotors are employed, the combined arrangement of ultrasonic vibrators can be simply implemented.

As described above, in embodiments, it is possible to arrange one or more ultrasonic vibrators with a simple construction in a closed type waste water treatment apparatus. In addition, even if one or more rotors are employed, the combined arrangement of ultrasonic vibrators can be simply implemented.

Embodiments of the invention will now be described, by way of example only, with reference to the accompanying drawings, in which:
FIG. 1 is a vertical cross-sectional view showing a construction of a conventional waste water treatment apparatus;
FIG. 2 is a schematic vertical cross-sectional view of a waste water treatment apparatus in a first embodiment of the present invention;
FIG. 3 is a schematic horizontal cross-sectional view of a waste water treatment apparatus in a second embodiment of the present invention; and
FIG. 4 is a schematic horizontal cross-sectional view of a waste water treatment apparatus in a third embodiment of the present invention.

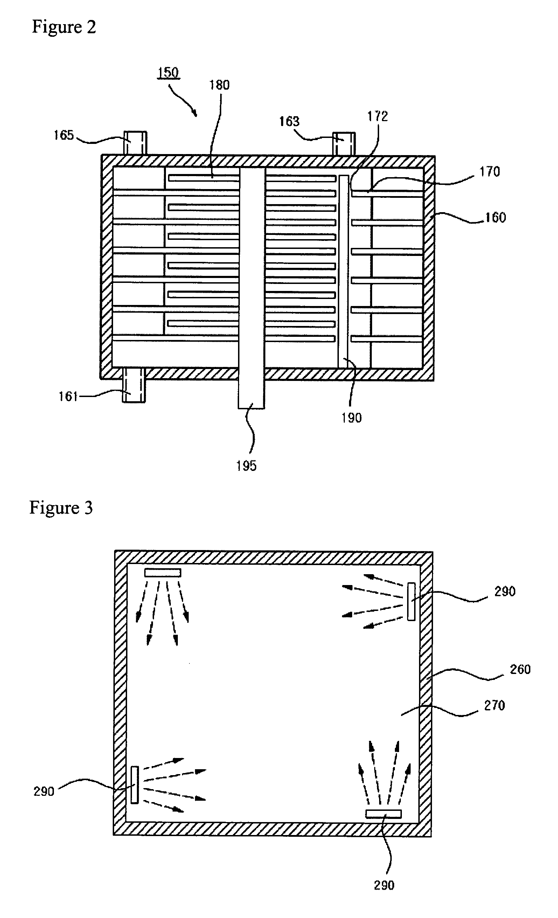

Referring to FIG.2, a closed type waste water treatment apparatus 150 includes a barrel 160, a plurality of filters 170 and rotors 180 stacked within the barrel 160, and a vibrator 190 installed within the barrel 160, like the conventional waste water treatment apparatus as shown in FIG. 1. Although in the embodiments shown FIG. 2 and described below, the construction of the closed type waste water treatment apparatus 150 is schematically represented for the convenience of illustration and description, its detailed construction will be implemented to be similar to the conventional closed type waste water treatment apparatus shown in FIG. 1.

The barrel 160 includes a waste water inlet 161, through which the waste water to be treated is introduced into the barrel 160, a treated water outlet 165, through which treated water obtained by filtering the waste water is discharged to the outside, and a concentrated water outlet 160, through which waste water concentrated as the result of filtering is discharged to the outside.

The filters 170 are stacked within the barrel 160, so that the waste water introduced through the waste water inlet 161 is filtered by the filters 170, the treated water obtained by the filtering is discharged through the treated water outlet 165, and the concentrated water is discharged through the concentrated water outlet.

The rotors 180 are alternately arranged in such a manner that a rotor is arranged between two adjacent filters. The rotors 180 are rotated by a rotary shaft 195, thereby producing vertex in the spaces formed between the filters 170, so that solid matter is deposited on the filters 170.

An ultrasonic vibrator 190 is installed through the filters 170 within the barrel 160 so as to apply ultrasonic vibration to the spaces between the filters 170. The ultrasonic vibrator 190 is formed in a bar shape. For this arrangement, each of the filters 170 is formed with a through-hole 172, and the through-holes 172 of the filters 170 are aligned in line when the filters 170 are assembled, thereby providing a passage, through which the bar-shaped ultrasonic vibrator 190 can be installed.

Like this, because a single ultrasonic vibrator 190 is arranged through the filters 170, it is not necessary to provide an ultrasonic vibrator 190 between each two adjacent filters 170. As a result, the construction of the waste water treatment apparatus is very simple. Accordingly, the provision of the ultrasonic vibrator 190 in combination with the rotors does not result in structural complexity in the waste water treatment apparatus, thereby increasing the endurance and reducing manufacturing costs.

Although an example provided with the rotors 180 and the ultrasonic vibrator 190 in combination has been described in the above mentioned embodiment, it is possible to provide only the ultrasonic vibrator 190 in the same construction as shown in FIG. 2.

In addition, although the ultrasonic vibrator 190 extends through all the filters 170 in the embodiment shown in FIG. 2, such an ultrasonic vibrator 190 may be installed to extend through some of the filters 170. For example, a pair of ultrasonic vibrators may be installed at left and right sides in the barrel in such a manner that the left ultrasonic vibrator only extends through the filters arranged at the lower half of the barrel, and the right ultrasonic vibrator only extends through the filters arranged at the upper half of the barrel.

Referring to FIG. 3, except for the arrangement of ultrasonic vibrators 290, the other part of present embodiment is the same as that of the embodiment shown in FIG. 2. Therefore, the description of the part same with the above-mentioned embodiment will be omitted.

In the present embodiment, the closed type waste water treatment apparatus includes a square barrel 260, and a plurality of filters 270 stacked within the barrel 260, wherein ultrasonic vibrators 290 arranged through the filters 270 like the ultrasonic vibrator 190 shown in FIG. 2.

Each of the ultrasonic vibrators 290 is arranged at a corner area of the barrel 260. Consequently, four ultrasonic vibrators 290 are provided in the present embodiment.

Each of the ultrasonic vibrators 290 is formed in a rectangular cross-sectioned bar shape, wherein ultrasonic waves are outputted from a longer side of the rectangular cross-section. The longer side of each ultrasonic vibrator 290 is arranged to face the other corner area of the barrel opposed to the corner area where the ultrasonic vibrator 290 is arranged, so that the ultrasonic vibrator 290 projects ultrasonic waves toward the other corner area. As a result, the longer sides of the ultrasonic vibrators 290 are oriented in a circular direction, so that the ultrasonic waves outputted from the ultrasonic vibrators 290 entirely form a pattern circulating within the barrel (in a counterclockwise circulating pattern in FIG. 3).

With this arrangement, the ultrasonic waves are adapted to be evenly applied to the entire area of the filters 270. If the ultrasonic vibrators 290 are arranged in such a manner that the ultrasonic area outputted at the corners of the barrel 260 is only directed toward the central area of the barrel 260, the strength of the ultrasonic waves applied to the central areas of the filters 270 is different from that applied to the other areas of the filters 270. As a result, the ultrasonic waves are not uniformly applied to the entire area of each of the filters 270, which means that the solid matter removal effect is differently represented in each filter 270 depending on the areas thereof. However, with the arrangement shown in FIG. 3, the entire area of each filter 270 is subjected to uniform wave strength, so that the solid matter removal effect is uniformly represented in the entire area of each filter 270.

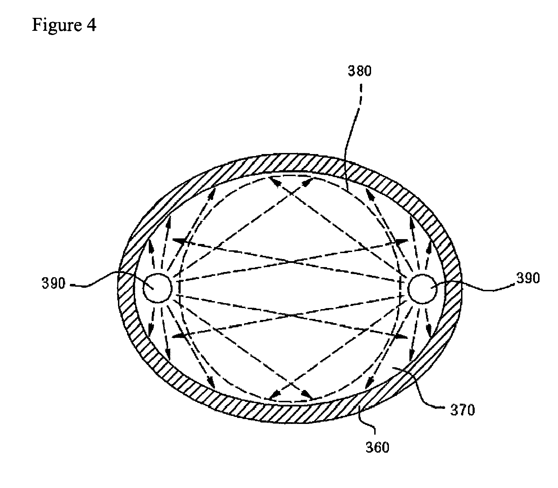

Referring to FIG. 4, identically shaped filters 370 are stacked with an oval cross-sectioned barrel 360, and rotors 380, each being arranged between the two adjacent filters 370.

A pair of ultrasonic vibrators 390 are arranged to extend through the filters 370 at the opposite end areas of the filters 370 on the major axis of the oval cross-section, respectively. With this arrangement, if the barrel 360 is formed approximately in an oval cross-section and the rotors 380 are arranged in combination with the filters 390, it is possible to obtain a solid matter removal effect by the rotors as well as to secure the spaces for installing the ultrasonic vibrators 390 irrespective of the arrangement of the rotors 380.

The invention is not restricted to the features of the described embodiments.

## Claims

1. A closed type waste water treatment apparatus comprising:
a barrel having a waste water inlet, for introduction of waste water into the barrel, a treated water outlet, for discharge of treated water obtained by filtering the waste water, and a concentrated water outlet, for discharge of water concentrated with pollutant as a result of filtering the waste water;
a plurality of filters for filtering the waste water introduced through the waste water inlet, the filters being stacked within the barrel; and
at least one ultrasonic vibrator extending through at least one of the filters within the barrel so as to apply ultrasonic vibration within the spaces between the filters.

2. A closed type waste water treatment apparatus as claimed in claim 1, wherein the closed type waste water treatment apparatus comprises a plurality of ultrasonic vibrators symmetrically arranged within the barrel with reference to the center of the barrel.

3. A closed type waste water treatment apparatus as claimed in claim 2, wherein the barrel has a four-cornered cross-sectional shape, and the ultrasonic vibrators are disposed at corner areas of the barrel, respectively.

4. A closed type waste water treatment apparatus as claimed in claim 3, wherein each of the ultrasonic vibrators is arranged so as to apply the ultrasonic waves from one corner area in the barrel toward a corner area opposite to the one corner area, so that the ultrasonic waves from the ultrasonic vibrators are applied in a pattern of circulating within the barrel.

5. A closed type waste water treatment apparatus as claimed in any of claims 1 to 4, further comprising a plurality of rotors, each of which is disposed between two adjacent filters, for producing vortex between the filters.

6. A closed type waste water treatment apparatus as claimed in claim 1, further comprising a plurality of rotors, each of which is disposed between two adjacent filters, for producing vortex between the filters, wherein the barrel has an ellipsoidal cross-section, and the ultrasonic vibrators are arranged at opposite end areas of longer laterals of the ellipsoidal barrel.
